(19) Europäisches Patentamt
European Patent Office
Office européen des brevets

(11) **EP 4 455 725 A1**

(12) **EUROPEAN PATENT APPLICATION**

(43) Date of publication:
**30.10.2024 Bulletin 2024/44**

(21) Application number: **23170871.0**

(22) Date of filing: **28.04.2023**

(51) International Patent Classification (IPC):
*G01S 7/51* (2006.01)        *G01S 17/08* (2006.01)
*G01S 17/87* (2020.01)       *G01S 17/931* (2020.01)
*G01S 13/08* (2006.01)       *G01S 13/87* (2006.01)
*G01S 13/931* (2020.01)      *G01S 15/08* (2006.01)
*G01S 15/87* (2006.01)       *G01S 15/931* (2020.01)
*G01S 7/04* (2006.01)        *G01S 7/56* (2006.01)
*B60W 50/14* (2020.01)

(52) Cooperative Patent Classification (CPC):
**G01S 7/51; B60W 50/14; G01S 7/04; G01S 7/56;
G01S 13/08; G01S 13/87; G01S 13/931;
G01S 15/08; G01S 15/87; G01S 15/931;
G01S 17/08; G01S 17/87; G01S 17/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Valeo Internal Automotive Software
Egypt, LLC
Giza, Cairo (EG)**

(72) Inventors:
• **Radwan, Mohamed
  Cairo (EG)**
• **Elsherbiney, Ibrahim
  Cairo (EG)**

(74) Representative: **Hofstetter, Schurack & Partner
Patent- und Rechtsanwaltskanzlei
PartG mbB
Balanstrasse 57
81541 München (DE)**

(54) **METHOD TO PROVIDE AN OPTICAL DISTANCE WARNING FUNCTION FOR A VEHICLE**

(57) The invention relates to a method to provide an optical distance warning function (5) for a vehicle (1). The method comprises: providing (S2) distance data (20) describing an environment (6) of the vehicle, which is divided into sectors (7) each extending from a vehicle outer wall (8) to a sector boundary line (9); for each sector (7), determining a point position information (22) describing a point (14) of an object (23) closest to the vehicle (1), or if the sector (7) is free of the object (23) a centrally located point (14) on the sector boundary line (9); determining (S4) a warning line (15) around the vehicle (1) by connecting the points (14); and providing the optical distance warning function (5) by displaying (S5) a schematic representation of the determined warning line (15) around a schematic representation of the vehicle (1) by a display device (4) in the vehicle (1).

Fig.1

**Description**

The invention relates to a method to provide an optical distance warning function for a vehicle. The invention furthermore relates to a vehicle, a control unit, a computer program product and a computer-readable storage medium to perform such a method.

A vehicle may comprise at least one distance sensor device for determining a distance information describing a distance between the vehicle and at least one object in a coverage area of the distance sensor device. Based on the determined distance information, the vehicle may provide an optical distance warning function in the vehicle. The optical distance warning function may comprise displaying a schematic representation of the vehicle with markings on it to indicate a part of the vehicle oriented in the direction of the at least one object and/or with markings around it to indicate a part of the coverage area in which the object is located. The markings may depend in color on the determined distance information. A display device in the vehicle may display the optical distance warning function for a driver of the vehicle.

The displayed optical distance warning function should match a real environment of the vehicle and in particular real obstacles surrounding the vehicle. It should reflect any changes in the environment in a clear and meaningful way to inform the driver in a user-friendly way about potential obstacles in a path of the vehicle.

It is the object of the invention to provide an optical distance warning function for a vehicle that provides a user-friendly visualization of an environment of the vehicle.

The independent claims solve this object.

A first aspect of the invention relates to a method to provide an optical distance warning function for a vehicle. The optical distance warning function comprises displaying a schematic representation on a display device in the vehicle. The vehicle is in particular a motor vehicle.

The method comprises providing distance data. The provided distance data describe a distance to at least one object in an environment of the vehicle. The environment is preferably a 360-degree environment of the vehicle. At least one sensor device of the vehicle may capture the distance data. The at least one sensor device may transmit the captured distance data to a control unit of the vehicle. The control unit then provides the distance data to perform the inventive method. The method hence does not necessarily comprise collecting the distance data, but may start when the distance data are already available.

The environment of the vehicle is divided into multiple sectors. Each sector extends from a vehicle outer wall of the vehicle to a sector boundary line of the sector. The vehicle outer wall is a surface of a chassis or body of the vehicle. The sector boundary line limits the sector in a radial direction originating from the vehicle. The sector boundary line may spatially limit a coverage area of the sensor device that provides the distance data for this sector. At long sides of the vehicle, the respective sector may have a rectangular cross-section. At a front and/or rear of the vehicle, the respective sector may have the appearance of a ring section, wherein a side of the respective sector bordering the vehicle outer wall is shorter than a length of the sector boundary line. The multiple sectors are located adjacent to one another. Preferably, there is no overlapping between individual sectors of the environment. The number and/or size of sectors is predetermined and may depend on the vehicle. It is assumed that the entire environment of the vehicle is covered by the multiple sectors.

For each sector, the method comprises applying a point determination algorithm on the provided distance data to determine a point position information. The point position information describes a point of the at least one object closest to the vehicle. If the sector is free of the at least one object, for example, because there is no object located in this sector, the point position information describes a centrally located point on the sector boundary line. If there is the at least one object in the sector, the point position information always describes the closest point of this object to the vehicle. Only if there is no object in the sector, the point position information describes the centrally located point. For example, if the environment is divided into four different sectors, the point determination algorithm is applied for all these four sectors to determine in total four point position information. If there is at least one object located in the sector, the distance data for this sector describe a surface of this object facing the vehicle. By analyzing the distance data, the method determines the shortest distance between the vehicle and the surface of the object. The point position information then describes a point on the surface of the object at this shortest distance, as it is the point in the sector that is located closest to the vehicle. In the end, there is exactly one point described by the respective point position information, which is determined for each sector of the environment of the vehicle. The point determining algorithm comprises at least one rule to determine the point information based on the distance data. The determined point information may be a coordinate of the respective point, in particular a two-dimensional coordinate. The two-dimensional coordinate may be calculated by projecting a height coordinate of the point in height direction of the vehicle on a ground on which the vehicle is positioned.

The method comprises determining a warning line all around the vehicle by connecting all the points according to the determined point position information. This means that, for example, the four determined points for the four sectors together form the warning line. The warning line surrounds the vehicle. However, there is a distance greater than zero between the vehicle outer wall and the warning line unless the vehicle is in direct contact with the at least one object. The distance between the vehicle outer wall and the warning line depends on the distance between the vehicle and the closest point of the at least one object or on the distance between the vehicle outer wall and the sector boundary line, respectively. The warning line passes through at least one point on the surface of the at least one object if there is any object located in the environment the distance data cover.

The method comprises providing the optical distance warning function by displaying a schematic representation of the determined warning line around a schematic representation of the vehicle by a display device in the vehicle. The method hence transfers the warning line determined based on the distance data into the displayed schematic warning line. A relative distance between the schematic representations of the vehicle and the warning line reflects or corresponds to the real distance between the vehicle and the at least one object or the sector boundary line, respectively.

If a user of the vehicle looks at the display device that displays the optical distance warning function, the user may easily recognize the schematic representation of his or her vehicle as well as the schematic representation of the warning line. The warning line is, if there in the at least one object in the environment, a boundary line for a movement in the direction of the at least one object because the line comprises the closest point or points towards this object. The warning line hence visualizes the spatial limits of an available space for the vehicle or of a coverage area of distance data, respectively. Therefore, the described optical distance warning function visualizes a real environment of the vehicle and in particular real obstacles surrounding the vehicle. It also reflects any changes in the environment in a clear and meaningful way to inform the driver in a user-friendly way about potential obstacles in a path of the vehicle by displaying the schematic representation of the determined warning line with respect to the vehicle.

Preferably, the control unit performs the described method. The control unit is, for example, an electronic control unit. The control unit provides the distance data, applies the point determination algorithm, determines the warning line and provides the optical distance warning function by operating the display device in the vehicle. The method is hence a computer-implemented method.

The display device in the vehicle may be a display of a mobile device, such as a smartphone and/or tablet. The mobile device is positioned in the vehicle. The mobile device receives then, for example, display data from the control unit and operates its display according to the received display data. The display data describe the schematic representations of the vehicle and the warning line.

According to an embodiment, determining the warning line comprises applying a curve determination algorithm on the point position information determined for the multiple sectors. The result of this is determining a respective curve information. The respective curve information describes a respective curve connecting the respective points of two directly adjacent sectors of the multiple sectors. The curve determination algorithm is applied until curve information are available that connect each point with the points in the two directly adjacent sectors. This means that one curve connects, for example, the point in a first sector and the point in an adjacent second sector. Another curve then connects the point in the second sector with the point in a third sector and so on until there is a curve between each two points described by the determined point position information. The respective adjacent sector may alternatively be referred to as a successive sector. In principle, the curve determination algorithm determined line segments of the warning line, wherein the line segments are preferably curved and no straight lines. The curve determination algorithm comprises at least one rule to calculate the respective curve. It may be based on geometrical assumptions to determine curves between individual points.

Besides, determining the warning line comprises connecting the curves according to all the determined curve information to the warning line. This means that the warning line in a sequence of the multiple individual curves. Since each point is connected to its two neighboring points, there are no offsets between the curves. This explains how the warning line can easily be determined based on the point position information.

More precisely, an embodiment comprises that the curve determination algorithm is applied on exactly four point position information at a time to determine the curve information. The four point position information are determined for four adjacent sectors.

The method thus preferably requires at a minimum four individual point position information and hence at least four sectors. The four point position information describe a first point in a first sector, a second point in a second sector, a third point in a third sector, and a fourth point in a fourth sector. The four points are located in adjacent and hence successive sectors. There is no sector located between these four sectors. After applying the curve determination algorithm on the four point position information it can be applied on another combination of four point position information.

By applying the curve determination algorithm on the exactly four position information, a curve information is determined that describes the curve connecting the points of the middle two sectors of the four adjacent sectors. These are here the second point and the third point of the four points. Under consideration of the four point position information, only the curve connecting these two points is calculated and hence provided. The outer two points from the outer two sectors, which are here the first point and the fourth point, are required for the determination of the curve information. As a result, the determination is particularly robust and accurate.

A further embodiment comprises that after determining the curve information for first four sectors, the curve determination algorithm is applied on second four sectors. A first sector, a second sector and a third sector of the second four sectors coincide with a second sector, a third sector and a fourth sector of the first four sectors. Alternatively phrased, the curve information is first determined for the points in the first four sectors and then applied on the points in the second four sectors with an overlap of three sensors between the first four sectors and the second four sectors. After each application of the curve determination algorithm, the method moves on to one further sector by keeping three of the already considered four sectors. As a result, the connecting curves between the points in all the sectors are determined. There are hence no gaps in the determined warning line.

A further embodiment comprises that applying the curve determination algorithm comprises determining linear connecting lines between the four points and calculating a respective slope at the point in the second sector and at the point in the third sector of the respective four sectors. That means that to determine the connecting curve between the second point and the third point, the shortest distance between the first point and the second point, between the second point and the third point and between the third point and the fourth point is determined. Furthermore, the slope at the second point and the slope at the third point is calculated. This calculation requires the determined linear connecting lines. It also allows considering influences of neighboring sectors on the curve to determine a particularly precise curve information.

According to a further embodiment, the method comprises considering the linear connecting lines to the points in both directly adjacent sectors, when calculating the respective slope. To calculate the two slopes precisely, the method looks at the respective two points surrounding the respective middle point. Therefore, all four points in the four sectors have to be considered to determine the curve information. The slope at the second point is thus calculated based on the linear connecting line between the first point and the second point and the linear connecting line between the second point and the third point. This applies analogously to the slope at the third point. This explains why it is so important to look at four point position information at a time.

Moreover, an embodiment comprises that the respective curve described by the respective curve information is a third-order polynomial. In particular, it is an interpolating spline, which is in particular a Catmull-Rom spline. The third-order polynomial allows a change in curvature along the curve, for example, an S-shaped curve between the two points of the adjacent sectors. The third-order polynomial is highly smooth and robust. However, it allows keeping calculation requirements relatively low by avoiding an unnecessary high complexity. Such an unnecessary high complexity would be achieved when using a higher order polynomial to describe the curve. The Catmull-Rom spline is a particularly robust way to determine the curve information as described above. The Catmull-Rom spline is in particular a chordal Catmull-Rom spline. Thereby, a C0, C1, C2 connectivity is achieved at each point because of the use of Catmull-Rom splines.

A further embodiment comprises that two radial boundary lines spatially limit each sector. The respective radial boundary line is oriented in a radial direction, which is perpendicular to the vehicle outer wall. The radial direction hence points away from or towards the vehicle outer wall in the respective sector. The two radial boundary lines intersect the sector boundary line at two intersection points. The two radial boundary lines are located spatially apart from each other so that the two intersection points are also located spatially apart from another on the sector boundary line. The centrally located point is positioned centrally between the two intersection points on the sector boundary line. In case there is no object in the environment covered by one of the sectors, the middle point of the sector boundary line of this sector is determined by taking the middle point between the two intersection points of the radial boundary lines of this sector. The centrally positioned point is some sort of default value in case no object is located and/or detected in the respective sector. If there is, for example, no obstacle in the environment of the vehicle, the point in every sector would be the centrally located point on the respective sector boundary line. The method is thus even applicable if there is no object in the environment of the vehicle.

Moreover, an embodiment comprises that a sector width between the two radial boundary lines of each sector depends on a sensor distribution of sensor devices of the vehicle that capture the provided distance data. The respective sensor device is, for example, a radar device, a lidar device and/or an ultrasonic sensor device. The width of the sectors and the length of the vehicle outer wall define a total number of sectors. If there is a high distribution of sensor devices around the vehicle, there can be multiple individual sectors with a relatively small sector width. The then determined warning line is particularly detailed. In case of, for example, six sensor devices in the front and six sensor devices in the rear of the vehicle, the environment may comprise 28 sectors (eight in the front, eight in the rear and six on each long side of the vehicle). The sector width may vary between individual sectors of the vehicle. This allows optimal dividing of the environment into sectors.

According to another embodiment, a sector length between the vehicle outer wall and the sector boundary line in each sector depends on a coverage area of a sensor device of the vehicle that captures the distance data covering this sector. Typically, at the sides of the vehicle, the sector length is shorter than at the front and rear of the vehicle because the front and rear typically provide a higher quality of sensor devices than the long sides of the vehicle. For example, at the front and rear of the vehicle, the sector length may be up to 4 meters and only up to 3 meters on the opposing long sides of the vehicle. Alternative sector lengths are possible. The sector length may also depend on a type of sensor device. For example, the sector length for a radar device may differ from the sector length for an ultrasonic sensor and/or a lidar device. The sensor device in the rear has no influence on the sector length in the front and vice versa, meaning that only the sector that the respective sensor device actually covers is influenced by this sensor device. The sector length is particularly important in sectors, which are free of the object. There, the sector length defines the distance between the vehicle and the point according to the determined point position information.

The sector width and the sector length of the respective sector are predetermined values. They are in particular stored in a storage unit of the vehicle, in particular of the control unit.

A further embodiment comprises that the schematic representation of the warning line is displayed in a color that varies locally depending on a local distance of each point on the warning line to the vehicle outer wall. The closer the warning line is to the vehicle, the more outstanding the color may be. It is possible to, for example, color the warning line in green when there is still at least one meter distance to the respective object. However, the color may change to orange at a distance of half a meter and to red at a distance of 30 centimeters. Other or more distance values causing a color change are possible. Alternatively or additionally to a variation of color, it is possible to vary, for example, a width and/or a structure of the displayed schematic representation of the warning line. Choosing the color locally dependent on the actual distance of the warning line to the vehicle results in a user-friendly visualization because it is particularly intuitive for the user.

Another aspect of the invention relates to a vehicle. The vehicle is configured to perform the above-described method. The vehicle is preferably a motor vehicle. The vehicle is, for example, a passenger car, a truck, a bus, a motorcycle, and/or a moped. The motor vehicle comprises a control unit to perform the method.

Another aspect of the invention relates to a control unit for a vehicle. The control unit is configured to perform the above-described method. The control unit performs the method.

The control unit is a computing unit. The control unit may in particular be understood as a data processing device, which comprises processing circuitry. The control unit can therefore in particular process data to perform computing operations. This may also include operations to perform indexed accesses to a data structure, for example a look-up table, LUT.

In particular, the control unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The control unit may also include one or more processors, for example one or more microprocessors, one or more central processing units, CPU, one or more graphics processing units, GPU, and/or one or more signal processors, in particular one or more digital signal processors, DSP. The control unit may also include a physical or a virtual cluster of computers or other of said units.

In various embodiments, the control unit includes one or more hardware and/or software interfaces and/or one or more memory units.

A memory unit may be implemented as a volatile data memory, for example a dynamic random access memory, DRAM, or a static random access memory, SRAM, or as a nonvolatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Besides, an aspect of the invention relates to computer program product which comprises instructions. When the program is executed by a computer such as the control unit, the instructions cause the computer to carry out the above-described method. The computer program product is a computer program.

Furthermore, an aspect of the invention relates to a computer-readable storage medium comprising instructions which, when executed by a computer such as the control unit, cause the computer to carry out the above-described method.

Further features of the invention are apparent from the claims, the figures and the description of figures. The invention includes combinations of the described embodiments. The embodiments described in context with the method according to the invention, individually as well as in combination with each other, apply accordingly, as far as applicable, to the vehicle according to the invention, the control unit according to the invention, the computer program product according to the invention and the computer-readable storage medium according to the invention.

A respective information in the sense of the invention may comprise respective data. However, it may only comprise one value and/or coordinates.

The figures show in:

Fig. 1    a schematic representation of a vehicle with multiple surrounding sectors of an environment of the vehicle;

Fig. 2    a schematic representation of a method to provide an optical distance warning function for a vehicle;

Fig. 3    a detailed schematic representation of a distribution of points in sectors around a vehicle; and

Fig. 4     a schematic representation on how to calculate a slope at a point in a sector.

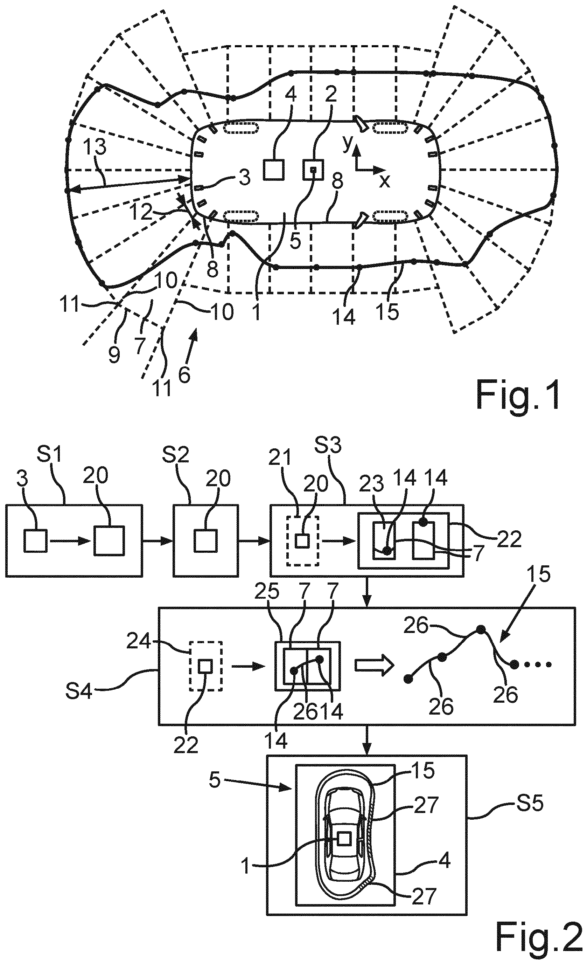

Fig. 1 shows a vehicle 1. The vehicle 1 comprises a control unit 2. The control unit 2 is, for example, an electronic control unit of the vehicle 1. The vehicle comprises multiple sensor devices 3. Other arrangements and/or another amount of sensor device 3 are possible. The respective sensor devices 3 is, for example, a radar device, a lidar device and/or an ultrasonic sensor. Hence, the respective sensor device 3 may determine a distance to an object 23 (see reference sign 23 in Fig. 2) in an environment 6 of the vehicle 1. The environment 6 of the vehicle 1 is spatially limited by a coverage area of the sensor devices 3.

The vehicle 1 may comprise a display device 4. The display device 4 is, for example, located in a center console of the vehicle 1. Alternatively or additionally, the display device 4 may be a head-up display. The display device 4 may comprise a touch screen. Besides, the display device 4 may be a mobile device positioned in the vehicle 1, such as a smartphone and/or a tablet. The mobile device may receive data and/or information from the control unit 2 of the vehicle 1.

The vehicle 1 comprises an optical distance warning function 5. A software to provide the optical distance warning function 5 may be stored in and executed by the control unit 2.

The environment 6 of the vehicle 1 is divided into multiple sectors 7. The environment 6 is here a 360-degrees environment 6. Each sector 7 extends from a vehicle outer wall 8 of the vehicle 1 to a sector boundary line 9 of the sector 7. Besides, two radial boundary lines 10 spatially limit each sector 6. The two radial boundary lines 10 are orientated in a radial direction. The radial is perpendicular to the vehicle outer wall 8. The two radial boundary lines 10 intersect the sector boundary line 9 at two intersection points 11. The respective sector 7 has a sector width 12. The sector width is a distance between the two radial boundary lines 10 of the respective sector 7. The sector width 12 depends on a sector distribution of the sensor devices 3 of the vehicle 1. A sector length 13 between the vehicle outer wall 8 and the sector boundary line 9 in each sector 7 depends on a coverage area of the sensor device 3 of the vehicle 1 that covers this particular sector 7. All these mentioned features of the respective sector 7 are here exemplarily sketched for one of the sectors 7, respectively.

The invention comprises that for each sector 7 a point 14 is determined. All the points 14, meaning the respective point in the respective sector 7, are connected with their respective neighboring points 14 to form a warning line 15. The warning line 15 extends all around the vehicle 1.

Fig. 2 shows steps of a method to provide the optical distance warning function 5 for the vehicle 1. In a first step S1, the sensor devices 3 may provide distance data 20. The distance data 20 describe a distance to at least one object 23 in the environment 6 of the vehicle 1. In a step S2, the captured distance data 20 is provided by or to the control unit 2 that performs the method. Then, a step S3 is performed for each sector 7. In case of the example sketched in Fig. 1, the step S3 is performed for each one of the 28 sectors 7 of the vehicle1. The Step S3 comprises applying a point determination algorithm 21 on the provided distance data 20 to determine a point position information 20. The point position information 22 describes the point 14 of at least one object 23 closest to the vehicle 1. In case there is at least one object 23 in the respective sector 7, the point on a surface of the object 23 is determined at which the distance between the object 23 and the vehicle 1 is the smallest compared to the rest of the surface in this sector 7. The point is described by coordinates, which comprise an x- and y-direction according to the coordinate system sketched in Fig. 1. If the sector 7 is free of the at least one object 23, meaning that if there is no object 23 detected in the sector 7, a centrally located point 14 on the sector boundary line 9 is described by the point position information 22. The centrally located point 14 is positioned centrally between the two intersection points 11 on the sector boundary line 9. Such a scenario with no object 23 in the respective sector 7 is sketched in Fig. 1 for some of the sectors 7 in a front and rear of the vehicle 1.

A step S4 comprises determining the warning line 15 that extends all around the vehicle 1. This step S4 comprises connecting all the points 14 according to the determined point position information 22. More precisely, the step S4 may comprise applying a curve determination algorithm 24 on the point position information 22 determined for the multiple sectors 7 to determine a respective curve information 25. The respective curve information 25 describes a respective curve 26 connecting the points 14 of two directly adjacent sectors 7 of the multiple sectors 7. The curve determination algorithm 24 is applied until curve information 25 are available that connect each point 14 with the points 14 in the two directly adjacent sectors 7. In the example of Fig. 1, in total 28 curve information 25 would be determined. Afterwards, all the determined curve information 25 are connected to form the warning line 15.

A step S5 comprises displaying a schematic representation of the determined warning line 15 around a schematic representation of the vehicle 1 by the display device 4. By this display, the optical distance warning function 5 is operated. Here as an example, a display is sketched that does not exactly match the warning line 15 of Fig. 1. However, this example shows that regions 27 of the schematic representation of the warning line 15 that are located particularly close to the vehicle 1 may be marked. Preferably, the determined warning line 15 is displayed in a color that varies locally depending on the local distance of each point 14 on the warning line 15 to the vehicle outer wall 8. If, for example, a specific distance threshold is reached or if the distance is even smaller than this threshold, the respective part of the warning line can be colored in red. Different markings and/or colors are possible in this context.

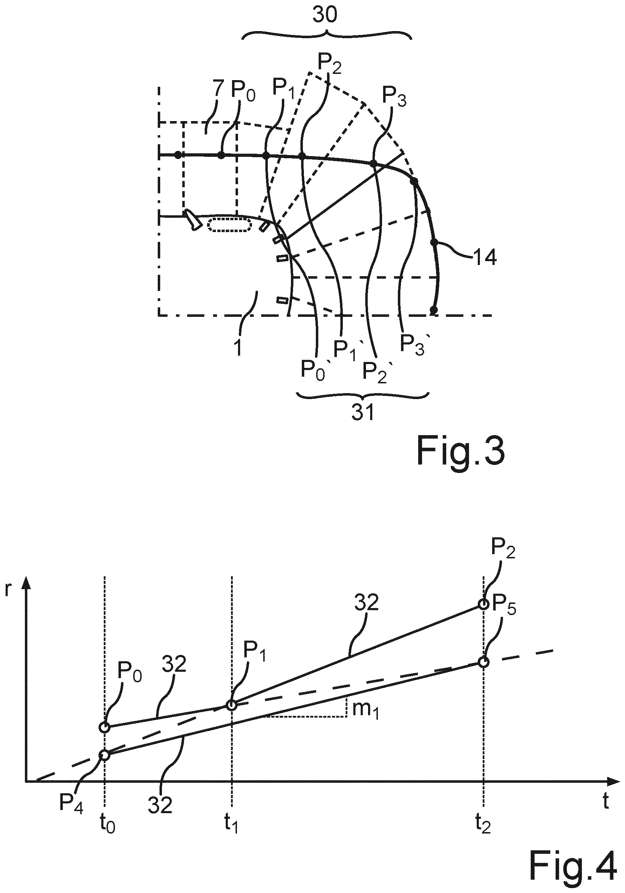

Fig. 3 shows in more detail how the curve information 25 can be determined. The curve determination algorithm 24 is always applied on exactly four point position information 22 at a time, whereas the four point position information 22 are determined for four adjacent sectors 7. The curve information 25 that is determined describes the curve 26 connecting the points 14 of the middle two sectors 7 of the four adjacent sectors 7. In Fig. 3, first four sectors 30 are marked as well as second four sectors 31. The points 24 in the first four sectors 30 may be differentiated as first point $P_0$, second point $P_1$, third point $P_2$, and fourth point $P_3$. For the second four sectors 31, the four points 14 are the first point $P_0'$, the second point $P_1'$, the third point $P_2'$, and the fourth point $P_3'$. First, the curve information 25 may be determined for the first four sectors 30 by applying the curve determination algorithm 24. Afterwards, the curve determination algorithm 24 is applied on the four points 14 of the second four sectors 31. A first sector 7 with the point $P_0'$, a second sector 7 with the point $P_1'$ and a third sector 7 with the point $P_2'$ of the second four sectors 31 may coincide with the second point $P_1$ in a second sector 7, the third point $P_2$ in a third sector 7 and the fourth point $P_3$ in a fourth sector 7 of the first four sectors 30.

Fig. 4 shows more details regarding applying the curve determination algorithm 24: Here, three points $P_0$, $P_1$, $P_2$ are sketched. The x-axis shows a distance in transversal direction (t) and the y-axis a distance in radial direction (r). Applying the curve determination algorithm 24 comprises determining linear connecting lines 32 between the respective four points 14 and calculating a respective slope $m_1$, $m_2$ at the second point $P_1$ in the second sector 7 and at the third point $P_2$ in the third sector 7 of the respective four sectors 7. Here, this is exemplary shown for the second point $P_1$ in the second sector 7. To calculate the slope $m_1$, the linear connecting lines 32 to the adjacent points $P_0$, $P_2$ in both directly adjacent sectors 7 are considered. Here, this means that the intersection between the linear connecting line 32 between the points $P_0$ and $P_1$ at a transversal distance of point $P_2$ is determined as a point $P_5$. Moreover, the intersection between the linear connecting line 32 between the points $P_1$ and $P_2$ at a transversal distance of point $P_0$ is determined as a point $P_4$. The connecting line between point $P_4$ and point $P_5$ has the slope $m_1$ which is the slope $m_1$ at the point $P_1$. The slope $m_2$ at the point $P_2$ may be determined analogously. The curve 26 may be a third-order polynomial. It is in particular an interpolating spline, in particular a Catmull-Rom spline. This means that the Catmull-Rom spline formulas may be used to calculate the respective curve information 25 for each four adjacent sectors 7 around the vehicle 1.

In the following this is described in more detail:

In order to have a more intuitive warning contour (warning line 15) to be displayed on the display device 4, new smooth paths using Catmull-Rom splines are generated to connect between the closest map points (points 14) surrounding the vehicle 1. The vehicle surrounding contour (vehicle outer wall 8) is already divided into sectors 7. For every sector 7, the closest point 14 to the vehicle 1 is selected. If there is no point 14 inside a sector 7, then a specific point 14 is selected at the middle of the contour (sector boundary line 9) at the specified maximum distance for warning range from the vehicle boundary. Then, curves 26 are generated to connect between such closest points 14 or selected locations using Catmull-Rom splines. There is a spline connecting the closest point 14 to the vehicle 1 in a sector 7 with the closest point 14 in the neighboring sector 7. Finally, all the splines at every sector 7 are connected all-together as they are already guaranteed to achieve C0, C1, C2 connectivity based on the definition of Catmull-Rom splines. At the end, the generated warning line 15 based on splines of third-order parametric polynomials is highly smooth and robust with the points 14 (obstacles) surrounding the vehicle 1.

The generated warning line 15 is highly smooth and robust with the dynamic points 14 (obstacles) surrounding the vehicle 1. Thus, it is more human intuitive, and makes the optical warning on the display device 4 more convenient to the driver's feelings. Moreover, it can be adapted easily on any vehicle dimensions and on any control unit 2 as it doesn't require much computing power. Finally, it just needs to be fed with the points 14 (obstacles) surrounding the vehicle 1, and the warning sectors 7 for a vehicle 1 designed based on the sensors mounting positions, then it shall generate intuitive warning line splines on the display device 4.

If the obstacles (object 23) surrounding the vehicle 1 are detected, then they shall be dynamically changing their positions, like for example pedestrians are moving around the vehicle 1, or the vehicle 1 is parking and coming close to obstacles of a parking slot. In such case, the warning line 15 on the display device 4 needs to be interactively showing such dynamic detections to the driver. The warning line 15 of spline curves shall be dynamically reflecting such changes in the points 14 in a robust and intuitive way relevant to the user feelings that make it highly appealing.

Third order polynomial function on parameter (t) is defined to connect ($P_1$) with ($P_2$) starting with rate of change or slope ($m_1$) and ending with rate of change or slope ($m_2$), where $t \in [0,1]$.

$$P(t) = a\,t^3 + b\,t^2 + c\,t + d$$

$$P(t = 0) = d = P_1 \qquad\qquad [1]$$

$$P(t = 1) = a + b + c + d = P_2 \qquad [2]$$

$$\dot{P}(t) = 3a\,t^2 + 2b\,t + c$$

$$\dot{P}(t = 0) = c = m_1 \qquad [3]$$

$$\dot{P}(t = 1) = 3a + 2b + c = m_2 \qquad [4]$$

By substituting [1] and [3] in [2]:

$$a + b + m_1 + P_1 = P_2$$

$$b = P_2 - m_1 - P_1 - a \qquad [5]$$

By substituting [3] and [5] in [4]:

$$3a + 2[P_2 - m_1 - P_1 - a] + m_1 = m_2$$

$$a = m_2 + m_1 - 2P_2 + 2P_1 \qquad [6]$$

By substituting [6] in [5]:

$$b = 3(P_2 - P_1) - 2m_1 - m_2 \qquad [7]$$

Based on [1], [3], [6], and [7], the polynomial coefficients can be computed:

$$\boldsymbol{a = 2P_1 - 2P_2 + m_1 + m_2}$$

$$\boldsymbol{b = -3P_1 + 3P_2 - 2m_1 - m_2}$$

$$\boldsymbol{c = m_1}$$

$$\boldsymbol{d = P_1}$$

Catmull-Rom equations:

$$q(t) = \left(\frac{t - t_1}{t_2 - t_1}\right) B_2 + \left(\frac{t_2 - t}{t_2 - t_1}\right) B_1 \qquad [8]$$

$$B_1 = \left(\frac{t - t_0}{t_2 - t_0}\right) A_2 + \left(\frac{t_2 - t}{t_2 - t_0}\right) A_1 \qquad [9]$$

$$B_2 = \left(\frac{t - t_1}{t_3 - t_1}\right) A_3 + \left(\frac{t_3 - t}{t_3 - t_1}\right) A_2 \qquad [10]$$

$$A_1 = \left(\frac{t - t_0}{t_1 - t_0}\right) P_1 + \left(\frac{t_1 - t}{t_1 - t_0}\right) P_0 \qquad [11]$$

$$A_2 = \left(\frac{t - t_1}{t_2 - t_1}\right) P_2 + \left(\frac{t_2 - t}{t_2 - t_1}\right) P_1 \qquad [12]$$

$$A_3 = \left(\frac{t - t_2}{t_3 - t_2}\right) P_3 + \left(\frac{t_3 - t}{t_3 - t_2}\right) P_2 \qquad [13]$$

By taking the derivatives of equations [8], [9], [10], [11], [12], and [13]:

$$\dot{q}(t) = \left(\frac{t - t_1}{t_2 - t_1}\right) \dot{B}_2 + \left(\frac{1}{t_2 - t_1}\right) B_2 + \left(\frac{t_2 - t}{t_2 - t_1}\right) \dot{B}_1 - \left(\frac{1}{t_2 - t_1}\right) B_1 \qquad [14]$$

$$\dot{B}_1 = \left(\frac{t - t_0}{t_2 - t_0}\right) \dot{A}_2 + \left(\frac{1}{t_2 - t_0}\right) A_2 + \left(\frac{t_2 - t}{t_2 - t_0}\right) \dot{A}_1 + \left(\frac{-1}{t_2 - t_0}\right) A_1 \qquad [15]$$

$$\dot{B}_2 = \left(\frac{t - t_1}{t_3 - t_1}\right) \dot{A}_3 + \left(\frac{1}{t_3 - t_1}\right) A_3 + \left(\frac{t_3 - t}{t_3 - t_1}\right) \dot{A}_2 + \left(\frac{-1}{t_3 - t_1}\right) A_2 \qquad [16]$$

$$\dot{A}_1 = \left(\frac{1}{t_1 - t_0}\right) P_1 + \left(\frac{-1}{t_1 - t_0}\right) P_0 \qquad [17]$$

$$\dot{A}_2 = \left(\frac{1}{t_2 - t_1}\right) P_2 + \left(\frac{-1}{t_2 - t_1}\right) P_1 \qquad [18]$$

$$\dot{A}_3 = \left(\frac{1}{t_3 - t_2}\right) P_3 + \left(\frac{-1}{t_3 - t_2}\right) P_2 \qquad [19]$$

By substitution of equations [11], [12], [13], [17], [18], and [19] in [15] and [16]:

$$\dot{B}_1 = \left(\frac{t - t_0}{t_2 - t_0}\right)\left[\left(\frac{1}{t_2 - t_1}\right) P_2 + \left(\frac{-1}{t_2 - t_1}\right) P_1\right] +$$

$$\left(\frac{1}{t_2 - t_0}\right)\left[\left(\frac{t - t_1}{t_2 - t_1}\right) P_2 + \left(\frac{t_2 - t}{t_2 - t_1}\right) P_1\right] +$$

$$\left(\frac{t_2 - t}{t_2 - t_0}\right)\left[\left(\frac{1}{t_1 - t_0}\right) P_1 + \left(\frac{-1}{t_1 - t_0}\right) P_0\right] + \qquad [20]$$

$$\left(\frac{-1}{t_2 - t_0}\right)\left[\left(\frac{t - t_0}{t_1 - t_0}\right) P_1 + \left(\frac{t_1 - t}{t_1 - t_0}\right) P_0\right]$$

$$\dot{B}_2 = \left(\frac{t - t_1}{t_3 - t_1}\right)\left[\left(\frac{1}{t_3 - t_2}\right)P_3 + \left(\frac{-1}{t_3 - t_2}\right)P_2\right] + \left(\frac{1}{t_3 - t_1}\right)\left[\left(\frac{t - t_2}{t_3 - t_2}\right)P_3 + \left(\frac{t_3 - t}{t_3 - t_2}\right)P_2\right]$$

$$+ \left(\frac{t_3 - t}{t_3 - t_1}\right)\left[\left(\frac{1}{t_2 - t_1}\right)P_2 + \left(\frac{-1}{t_2 - t_1}\right)P_1\right] \qquad [21]$$

$$+ \left(\frac{-1}{t_3 - t_1}\right)\left[\left(\frac{t - t_1}{t_2 - t_1}\right)P_2 + \left(\frac{t_2 - t}{t_2 - t_1}\right)P_1\right]$$

By computing at $t = t_1$ and $t = t_2$ for equations [20], [21], [9], [10], [11], [12], and [13]:

$$\dot{B}_1(t = t_1) = \left(\frac{t_1 - t_0}{t_2 - t_0}\right)\left[\left(\frac{1}{t_2 - t_1}\right)P_2 + \left(\frac{-1}{t_2 - t_1}\right)P_1\right] + \left(\frac{t_2 - t_1}{t_2 - t_0}\right)\left[\left(\frac{1}{t_1 - t_0}\right)P_1 + \left(\frac{-1}{t_1 - t_0}\right)P_0\right]$$

$$\dot{B}_1(t = t_2) = \left[\left(\frac{1}{t_2 - t_1}\right)P_2 + \left(\frac{-1}{t_2 - t_1}\right)P_1\right] + \left(\frac{P_2}{t_2 - t_0}\right)$$

$$+ \left(\frac{-1}{t_2 - t_0}\right)\left[\left(\frac{t_2 - t_0}{t_1 - t_0}\right)P_1 + \left(\frac{t_1 - t_2}{t_1 - t_0}\right)P_0\right]$$

$$\dot{B}_2(t = t_1) = \left(\frac{1}{t_3 - t_1}\right)\left[\left(\frac{t_1 - t_2}{t_3 - t_2}\right)P_3 + \left(\frac{t_3 - t_1}{t_3 - t_2}\right)P_2\right] + \left[\left(\frac{1}{t_2 - t_1}\right)P_2 + \left(\frac{-1}{t_2 - t_1}\right)P_1\right]$$

$$+ \left(\frac{-P_1}{t_3 - t_1}\right)$$

$$\dot{B}_2(t = t_2) = \left(\frac{t_2 - t_1}{t_3 - t_1}\right)\left[\left(\frac{1}{t_3 - t_2}\right)P_3 + \left(\frac{-1}{t_3 - t_2}\right)P_2\right] + \left(\frac{t_3 - t_2}{t_3 - t_1}\right)\left[\left(\frac{1}{t_2 - t_1}\right)P_2 + \left(\frac{-1}{t_2 - t_1}\right)P_1\right]$$

$$A_1(t = t_1) = P_1$$

$$A_1(t = t_2) = \left(\frac{t_2 - t_0}{t_1 - t_0}\right)P_1 + \left(\frac{t_1 - t_2}{t_1 - t_0}\right)P_0$$

$$A_2(t = t_1) = P_1$$

$$A_2(t = t_2) = P_2$$

$$A_3(t = t_1) = \left(\frac{t_1 - t_2}{t_3 - t_2}\right)P_3 + \left(\frac{t_3 - t_1}{t_3 - t_2}\right)P_2$$

$$A_3(t = t_2) = P_2$$

$$B_1(t = t_1) = \left(\frac{t_1 - t_0}{t_2 - t_0}\right)P_1 + \left(\frac{t_2 - t_1}{t_2 - t_0}\right)P_1 = P_1$$

$$B_1(t = t_2) = A_2(t = t_2) = P_2$$

$$B_2(t = t_1) = A_2(t = t_1) = P_1$$

$$B_2(t = t_2) = \left(\frac{t_2 - t_1}{t_3 - t_1}\right)P_2 + \left(\frac{t_3 - t_2}{t_3 - t_1}\right)P_2 = P_2$$

By substitution in [14] to at $t = t_1$ and $t = t_2$:

$$\dot{q}(t = t_1) = \left(\frac{1}{t_2 - t_1}\right)B_2(t = t_1) + \dot{B}_1(t = t_1) - \left(\frac{1}{t_2 - t_1}\right)B_1(t = t_1)$$

$$\dot{q}(t = t_1) = \left(\frac{1}{t_2 - t_1}\right)P_1 + \dot{B}_1(t = t_1) - \left(\frac{1}{t_2 - t_1}\right)P_1 = \dot{B}_1(t = t_1)$$

$$\dot{q}(t = t_1) = \left(\frac{t_1 - t_0}{t_2 - t_0}\right)\left(\frac{P_2 - P_1}{t_2 - t_1}\right) + \left(\frac{t_2 - t_1}{t_2 - t_0}\right)\left(\frac{P_1 - P_0}{t_1 - t_0}\right) \qquad [22]$$

$$\dot{q}(t = t_2) = \dot{B}_2(t = t_2) + \left(\frac{1}{t_2 - t_1}\right)B_2(t = t_2) - \left(\frac{1}{t_2 - t_1}\right)B_1(t = t_2)$$

$$\dot{q}(t = t_2) = \dot{B}_2(t = t_2) + \left(\frac{1}{t_2 - t_1}\right)P_2 - \left(\frac{1}{t_2 - t_1}\right)P_2 = \dot{B}_2(t = t_2)$$

$$\dot{q}(t = t_2) = \left(\frac{t_2 - t_1}{t_3 - t_1}\right)\left(\frac{P_3 - P_2}{t_3 - t_2}\right) + \left(\frac{t_3 - t_2}{t_3 - t_1}\right)\left(\frac{P_2 - P_1}{t_2 - t_1}\right) \qquad [23]$$

By reformulating equations [22] and [23]:

$$\frac{t_1 - t_0}{t_2 - t_0} = \frac{(t_2 - t_0) - (t_2 - t_1)}{t_2 - t_0} = 1 - \frac{(t_2 - t_1)}{t_2 - t_0}$$

$$\frac{t_2 - t_1}{t_2 - t_0} = \frac{(t_2 - t_0) - (t_1 - t_0)}{t_2 - t_0} = 1 - \frac{(t_1 - t_0)}{t_2 - t_0}$$

$$\dot{q}(t = t_1) = \left(1 - \frac{(t_2 - t_1)}{t_2 - t_0}\right)\left(\frac{P_2 - P_1}{t_2 - t_1}\right) + \left(1 - \frac{(t_1 - t_0)}{t_2 - t_0}\right)\left(\frac{P_1 - P_0}{t_1 - t_0}\right)$$

$$\dot{q}(t = t_1) = \left(\frac{P_2 - P_1}{t_2 - t_1}\right) - \left(\frac{P_2 - P_1}{t_2 - t_0}\right) + \left(\frac{P_1 - P_0}{t_1 - t_0}\right) - \left(\frac{P_1 - P_0}{t_2 - t_0}\right)$$

$$\dot{q}(t = t_1) = \left(\frac{P_1 - P_0}{t_1 - t_0}\right) + \left(\frac{P_2 - P_1}{t_2 - t_1}\right) - \left(\frac{P_2 - P_1}{t_2 - t_0}\right) - \left(\frac{P_1 - P_0}{t_2 - t_0}\right)$$

$$\dot{q}(t = t_1) = \left(\frac{P_1 - P_0}{t_1 - t_0}\right) + \left(\frac{P_2 - P_1}{t_2 - t_1}\right) + \left(\frac{-P_2 + P_1 - P_1 + P_0}{t_2 - t_0}\right)$$

$$\dot{q}(t = t_1) = \left(\frac{P_1 - P_0}{t_1 - t_0}\right) + \left(\frac{P_2 - P_1}{t_2 - t_1}\right) - \left(\frac{P_2 - P_0}{t_2 - t_0}\right) \qquad [24]$$

$$\frac{t_2 - t_1}{t_3 - t_1} = \frac{(t_3 - t_1) - (t_3 - t_2)}{t_3 - t_1} = 1 - \frac{(t_3 - t_2)}{t_3 - t_1}$$

$$\frac{t_3 - t_2}{t_3 - t_1} = \frac{(t_3 - t_1) - (t_2 - t_1)}{t_3 - t_1} = 1 - \frac{(t_2 - t_1)}{t_3 - t_1}$$

$$\dot{q}(t = t_2) = \left(1 - \frac{(t_3 - t_2)}{t_3 - t_1}\right)\left(\frac{P_3 - P_2}{t_3 - t_2}\right) + \left(1 - \frac{(t_2 - t_1)}{t_3 - t_1}\right)\left(\frac{P_2 - P_1}{t_2 - t_1}\right)$$

$$\dot{q}(t = t_2) = \left(\frac{P_3 - P_2}{t_3 - t_2}\right) - \left(\frac{P_3 - P_2}{t_3 - t_1}\right) + \left(\frac{P_2 - P_1}{t_2 - t_1}\right) - \left(\frac{P_2 - P_1}{t_3 - t_1}\right)$$

$$\dot{q}(t = t_2) = \left(\frac{P_3 - P_2}{t_3 - t_2}\right) + \left(\frac{P_2 - P_1}{t_2 - t_1}\right) - \left(\frac{P_3 - P_2}{t_3 - t_1}\right) - \left(\frac{P_2 - P_1}{t_3 - t_1}\right)$$

$$\dot{q}(t = t_2) = \left(\frac{P_2 - P_1}{t_2 - t_1}\right) + \left(\frac{P_3 - P_2}{t_3 - t_2}\right) + \left(\frac{-P_3 + P_2 - P_2 + P_1}{t_3 - t_1}\right)$$

$$\dot{q}(t = t_2) = \left(\frac{P_2 - P_1}{t_2 - t_1}\right) + \left(\frac{P_3 - P_2}{t_3 - t_2}\right) - \left(\frac{P_3 - P_1}{t_3 - t_1}\right) \qquad [25]$$

Since P(t) is related to q(t) as follows:

$$P(t) = q(t_1 + t(t_2 - t_1))$$

Then, the derivatives can be related as follows:

$$\dot{P}(t) = (t_2 - t_1)\,\dot{q}(t_1 + t(t_2 - t_1))$$

Then, the initial and final values (boundary conditions) of P(t) can be formulated as follows:

$$\dot{P}(0) = m_1 = (t_2 - t_1)\,\dot{q}(t_1)$$

$$\dot{P}(1) = m_2 = (t_2 - t_1)\,\dot{q}(t_2)$$

By substitution with equations [24] and [25], respectively:

$$m_1 = (t_2 - t_1)\left[\left(\frac{P_1 - P_0}{t_1 - t_0}\right) - \left(\frac{P_2 - P_0}{t_2 - t_0}\right) + \left(\frac{P_2 - P_1}{t_2 - t_1}\right)\right]$$

$$m_2 = (t_2 - t_1)\left[\left(\frac{P_2 - P_1}{t_2 - t_1}\right) - \left(\frac{P_3 - P_1}{t_3 - t_1}\right) + \left(\frac{P_3 - P_2}{t_3 - t_2}\right)\right]$$

The geometric intuition for how the successive points 14 are used to compute the slope $m_1$, $m_2$ of the intended curve 26 at the middle point 14 are presented in Fig. 4.

In summary a new visual warning line 15 for the vehicle 1 based on smooth dynamic curves using Catmull-Rom splines is described. According to the defined vehicle coordinates and warning sectors 7 shown in figure 1, a point 14 is selected at each sector 7. Such point 14 is the closest map point located in this sector 7 or the middle point 14 at the sector boundary line 9 if there are no points 14 in the specified sector 7.

By looping on the specified points 14, every four successive points 14 are selected and labeled $\{P_0, P_1, P_2, P_3\}$, then used as follows to generate the third-order polynomial connecting $P_1$ and $P_2$ based on the initial and final

slopes $m_1$, $m_2$ computed using the successive points $P_0$ and $P_3$. The chordal spline is used as it leads to the best performance, where the increment in $t_i$ between two successive points $\{t_i - t_{i-1}\}$ is the Euclidean distance between them $\|P_i - P_{i-1}\|$.

$$t_i = t_{i-1} + \|P_i - P_{i-1}\|^\alpha,$$

$$t_0 = 0, \; i = 1,2,3, \; and \; \alpha = 1 \; \rightarrow Chordal \; Spline.$$

$$m_1 = (t_2 - t_1)\left[\left(\frac{P_1 - P_0}{t_1 - t_0}\right) - \left(\frac{P_2 - P_0}{t_2 - t_0}\right) + \left(\frac{P_2 - P_1}{t_2 - t_1}\right)\right],$$

$$m_2 = (t_2 - t_1)\left[\left(\frac{P_2 - P_1}{t_2 - t_1}\right) - \left(\frac{P_3 - P_1}{t_3 - t_1}\right) + \left(\frac{P_3 - P_2}{t_3 - t_2}\right)\right],$$

$$a = 2P_1 - 2P_2 + m_1 + m_2,$$

$$b = -3P_1 + 3P_2 - 2m_1 - m_2,$$

$$c = m_1,$$

$$d = P_1,$$

$$P(t) = a\,t^3 + b\,t^2 + c\,t + d.$$

The computed polynomials (curves 26) are connected together to form the finally generated spline contour (warning line 15) that can be displayed to the user on the display device 4.

**Claims**

1. Method to provide an optical distance warning function (5) for a vehicle (1), comprising:

   - providing (S2) distance data (20) describing a distance to at least one object (23) in an environment (6) of the vehicle, wherein the environment (6) is divided into multiple sectors (7) each extending from a vehicle outer wall (8) of the vehicle (1) to a sector boundary line (9) of the sector (7);
   - for each sector (7), applying (S3) a point determination algorithm (21) on the provided distance data (20) to determine a point position information (22) describing a point (14) of the at least one object (23) closest to the vehicle (1), or if the sector (7) is free of the at least one object (23) a centrally located point (14) on the sector boundary line (9);
   - determining (S4) a warning line (15) all around the vehicle (1) by connecting all the points (14) according to the determined point position information (22); and
   - providing the optical distance warning function (5) by displaying (S5) a schematic representation of the determined warning line (15) around a schematic representation of the vehicle (1) by a display device (4) in the vehicle (1).

2. Method according to claim 1, wherein determining the warning line (15) comprises:

   - applying a curve determination algorithm (24) on the point position information (22) determined for the multiple sectors (7) to determine a respective curve information (25) describing a respective curve (26) connecting the respective points (14) of two directly adjacent sectors (7) of the multiple sectors (7), wherein the curve determination algorithm (24) is applied until curve information (25) are available that connect each point (14) with the points (14) in the two directly adjacent sectors (7); and
- connecting the curves (26) according to all the determined curve information (25) to the warning line (15).

3. Method according to claim 2, wherein the curve determination algorithm (24) is applied on exactly four point position information (22) at a time which are determined for four adjacent sectors (7) to determine the curve information (25) that describes the curve (26) connecting the points (14) of the middle two sectors (7) of the four adjacent sectors (7).

4. Method according to claim 3, wherein after determining the curve information (25) for first four sectors (30) the curve determination algorithm (24) is applied on second four sectors (31), wherein a first sector (7), a second sector (7) and a third sector (7) of the second four sectors (31) coincide with a second sector (7), a third sector (7) and a fourth sector (7) of the first four sectors (30).

5. Method according to claim 3 or 4, wherein applying the curve determination algorithm (24) comprises determining linear connecting lines (32) between the four points (14) and calculating a respective slope at the point (14) in the second sector (7) and at the point (14) in the third sector (7) of the respective four sectors (7).

6. Method according to claim 5, wherein, when calculating the respective slope, the linear connecting lines (32) to the points (14) in both directly adjacent sectors (7) are considered.

7. Method according to any one of the claims 2 to 6, wherein the respective curve (26) described by the respective curve information (25) is a third-order polynomial, in particular an interpolating spline, which is in particular a Catmull-Rom spline.

8. Method according to any one of the preceding claims, wherein each sector (7) is spatially limited by two radial boundary lines (10) oriented in a radial direction, which is perpendicular to the vehicle outer wall (8), wherein the two radial boundary lines (10) intersect the sector boundary line (9) at two intersection points (11) and the centrally located point (14) is positioned centrally between the two intersection points (11) on the sector boundary line (9).

9. Method according to claim 8, wherein a sector width (12) between the two radial boundary lines (10) of each sector (7) depends on a sensor distribution of sensor devices (3) of the vehicle that capture the provided distance data (20).

10. Method according to any one of the preceding claims, wherein a sector length (13) between the vehicle outer wall (8) and the sector boundary line (9) in each sector (7) depends on a coverage area of a sensor device (3) of the vehicle (1) that captures the provided distance data (20) covering this sector (7).

11. Method according to any one of the preceding claims, wherein the schematic representation of the warning line (15) is displayed in a color that varies locally depending on a local distance of each point (15) on the warning line (15) to the vehicle outer wall (8).

12. Vehicle (1) configured to perform a method according to any one of the preceding claims.

13. Control unit (2) for a vehicle (1) configured to perform a method according to any one of the claims 1 to 11.

14. Computer program product comprising instructions which, when the program is executed by a computer, cause the computer to carry out a method according to any one of the claims 1 to 11.

15. Computer-readable storage medium comprising instructions which, when executed by a computer, cause the computer to carry out a method according to any one of the claims 1 to 11.

Fig.1

Fig.2

Fig.3

Fig.4

Europäisches
Patentamt

European
Patent Office

Office européen
des brevets

# EUROPEAN SEARCH REPORT

**Application Number**

EP 23 17 0871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/124887 A1 (HORNYCH PETR [CZ] ET AL) 4 May 2017 (2017-05-04) | 1,8-15 | INV.<br>G01S7/51 |
| Y | * paragraphs [0024], [0030] - [0033], [0038] - [0046]; figures 3-11 * | 2-7 | G01S17/08<br>G01S17/87<br>G01S17/931 |
| X | US 2014/203925 A1 (AUGST ALEXANDER [DE]) 24 July 2014 (2014-07-24) | 1,8-15 | G01S13/08<br>G01S13/87 |
| Y | * paragraphs [0042] - [0045], [0052] - [0058]; figures 1-4 * | 2-7 | G01S13/931<br>G01S15/08<br>G01S15/87 |
| Y | US 2020/049511 A1 (SITHIRAVEL RAJIV [CA] ET AL) 13 February 2020 (2020-02-13) * paragraphs [0043], [0048] - [0049]; figures 6-10 * | 2-7 | G01S15/931<br>G01S7/04<br>G01S7/56<br>B60W50/14 |

**TECHNICAL FIELDS SEARCHED (IPC)**

G01S
B60W

The present search report has been drawn up for all claims

| Place of search | Date of completion of the search | Examiner |
|---|---|---|
| Munich | 15 September 2023 | Theißing, Nikolaus |

EPO FORM 1503 03.82 (P04C01)

## ANNEX TO THE EUROPEAN SEARCH REPORT
## ON EUROPEAN PATENT APPLICATION NO.

EP 23 17 0871

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2023

| Patent document cited in search report | | Publication date | Patent family member(s) | | Publication date |
|---|---|---|---|---|---|
| US 2017124887 | A1 | 04-05-2017 | EP 3163318 | A1 | 03-05-2017 |
| | | | US 2017124887 | A1 | 04-05-2017 |
| US 2014203925 | A1 | 24-07-2014 | DE 102011083770 | A1 | 04-04-2013 |
| | | | US 2014203925 | A1 | 24-07-2014 |
| | | | WO 2013045374 | A1 | 04-04-2013 |
| US 2020049511 | A1 | 13-02-2020 | CN 110816548 | A | 21-02-2020 |
| | | | DE 102019121140 | A1 | 13-02-2020 |
| | | | US 2020049511 | A1 | 13-02-2020 |

EPO FORM P0459

For more details about this annex : see Official Journal of the European Patent Office, No. 12/82